# EUROPÄISCHE PATENTANMELDUNG

(11) **EP 1 843 130 A2**
(43) Veröffentlichungstag der Anmeldung: **10.10.2007**
(21) Anmeldenummer: 07104128.9
(22) Anmeldetag: 14.03.2007
(51) Int. Cl.: G01C 21/36

(54) **Verfahren zur Darstellung einer Karte auf einem Bildschirm eines Navigationssystems sowie ein entsprechendes Navigationssystem**

(30) Priorität: 04.04.2006 DE 102006015740
(71) Anmelder: ROBERT BOSCH GMBH, 70442 Stuttgart (DE)
(72) Erfinder: Jung, Thomas, 33613, Bielefeld (DE)

(57) **Zusammenfassung**

Um bei einem Verfahren zur Darstellung einer Karte auf einem Bildschirm eines Navigationssystems die Wiedergabequalität zu erhöhen, wobei die Karte aus abgespeicherten Kacheln (5) zusammengesetzt wird, und auf dem Bildschirm Bereiche (3) mit hoher und Bereiche (1) mit niedriger Auflösung wiedergegeben werden, ist vorgeschlagen, dass bei einer zweidimensionalen Karte in einen Bereich (2) zwischen den Bereichen (1) und (3) sowohl Kacheln (5) mit hoher und mit niedriger Auflösung wiedergegeben und den Bildinformationen mit hoher Auflösung eine Maske (4) mit variabler Transparenz überlagert wird. Des Weiteren wir eine entsprechend ausgebildetes Navigationssystem angegeben.

## Beschreibung

### Technisches Gebiet

Die Erfindung betrifft ein Verfahren zur Darstellung einer Karte auf einem Bildschirm eines Navigationssystems, wobei die Karte aus abgespeicherten Kacheln zusammengesetzt wird und auf dem Bildschirm Bereiche mit hoher und Bereiche mit niedriger Auflösung wiedergegeben werden sowie ein entsprechend ausgebildetes Navigationssystem.

### Stand der Technik

Navigationssysteme sind in verschiedenen Ausgestaltungen am Markt erhältlich. Sie können entweder als transportable Geräte ausgeführt sein oder in ein Armaturenbrett eines Kraftfahrzeugs integriert werden. Navigationssysteme verfügen im Allgemeinen über eine Positionsbestimmungseinrichtung zur Bestimmung der Position des Navigationssystems bzw. des damit ausgestatteten Kraftfahrzeugs in an sich bekannter Weise anhand der von GPS- oder zukünftig von Galileo-Satelliten ausgesandten Signale. Ausgehend von dieser Position wird mit Hilfe einer Zielführungseinrichtung ein Weg zu einem vom Nutzer des Navigationssystems vorgegebenen Zielpunkt ermittelt und entsprechende Richtungshinweise optisch und/oder akustisch ausgegeben. Dabei kann auf Informationen bezüglich des Strecken- und Wegenetzes zurückgegriffen werden, die beispielsweise auf einer austauschbaren CD-Rom oder DVD gespeichert sind.

Zur Darstellung der Fahrtroute von der momentanen Position zum gewählten Zielpunkt ist es bekannt, dass auf einem Bildschirm bzw. einem Display des Navigationssystems eine Vektorkarte ausgegeben wird. Dies kann in zweidimensionaler Darstellung erfolgen, das bedeutet in Draufsicht von senkrecht oben, in pseudo-dreidimensionaler Darstellung oder in dreidimensionaler Darstellung in an sich bekannter Weise.

In zweidimensionaler oder pseudo-dreidimensionaler Darstellung werden hierbei Flächen bzw. Ausschnitte der Umgebung um die aktuelle Position des Navigationssystems häufig lediglich mit einem Farbton ohne Struktur wiedergegeben. Beispielsweise kann eine Wasserfläche blau, eine Wiese hellgrün und ein Waldstück dunkelgrün dargestellt werden. Hierdurch wird aber kein hochwertig anmutendes Aussehen der Darstellung erreicht.

Bei einer dreidimensionalen Darstellung können auch Satellitenaufnahmen oder Luftbilder zur realistischen Darstellung der Erdoberfläche, über die sich das Navigationssystem bzw. das Kraftfahrzeug bewegt, herangezogen werden. Hierzu ist allerdings ein separater Datenspeicher mit einer Vielzahl an derartigen Aufnahmen erforderlich und die Synchronisierung mit den Positionsdaten des Navigationssystems erfordertet einen erheblichen Rechenaufwand.

Die abgespeicherten Aufnahmen liegen meist in unterschiedlichen Auflösungen vor. Beispielsweise werden Übersichtskarten mit einer Auflösung von 30m pro Pixel und Detailkarten beispielsweise von Innenstadtplänen mit einer Auflösung von 2m pro Pixel verwendet.

Würden hier für die gesamte Fläche des zu befahrenden Gebiets, beispielsweise Europa, Aufnahmen in jeweils unterschiedlichen Maßstäben vorgehalten werden, so wäre dies mit einem erheblichen Speicher- und Rechenaufwand verbunden. Daher werden Gebiete, welche abseits von Straßen oder sonstigen verkehrsrelevanten Flächen liegen, nur mit hoher Auflösung dargestellt bzw. die entsprechenden Aufnahmen abgespeichert. Dabei ist es bekannt, dass die Aufnahmen der Erdoberfläche in einzelne Kacheln aufgeteilt und abgespeichert sind, die dann entsprechend dem gewählten Abbildungsmaßstab bzw. der aktuellen Umgebung um die Position des Navigationssystems abgerufen, randlos aneinandergesetzt und auf dem Bildschirm wiedergegeben werden.

Hierbei kann es erforderlich sein, dass eine Kachel mit geringer Auflösung neben einer Kachel mit hoher Auflösung wiedergegeben werden soll, so dass in den Übergangsbereichen es zu Sprüngen oder Versetzungen kommen kann. Hierzu können dem Fachmann bekannte dreidimensionale Renderer herangezogen werden, um die Übergänge von detaillierten zu hochaufgelösten Bildern bzw. Kacheln durch Unschärfen im Hintergrund zu verschleiern.

Als nachteilig hierbei ist es anzusehen, dass eine solche Vorgehensweise bei der Wiedergabe von zweidimensionalen Karten nicht möglich ist, da bei der Draufsicht von oben theoretisch zu allen Punkten der Wiedergabe die gleiche Entfernung vorliegt und somit kein Bildhintergrund und kein Bildvordergrund gegeben ist.

Die EP 1 508 778 A1 offenbart eine Navigationsvorrichtung bei der in einer Anzeigeeinheit an die Fahrtroute grenzende Objekte gegenüber übrigen Objekten in der Fahrzeugumgebung hervorgehoben dargestellt werden können. Beispielsweise können diese Objekte detailgetreuer oder vergrößert dargestellt werden, um beispielsweise auf Sehenswürdigkeiten, Raststätten oder dergleichen hinzuweisen. Gegebenenfalls kann diesen Objekten auch eine entsprechende Textur verliehen werden.

Ausgehend von diesem Stand der Technik liegt der Erfindung die Aufgabe zugrunde, ein Verfahren zur Darstellung einer Karte der Eingangs genannten Art zu schaffen, mit dem die Darstellung einer zweidimensionalen Karte mit Bereichen unterschiedlicher Auflösung ermöglicht wird. Des Weiteren soll ein entsprechend ausgebildetes Navigationssystem angegeben werden.

Diese Aufgaben werden durch die Merkmale der Ansprüche 1 und 4 gelöst.

Der Kerngedanke der Erfindung besteht darin, dass in dem Navigationssystem für die Darstellung einer zweidimensionalen Karte, das heißt mit einer Betrachtungsweise im Wesentlichen von senkrecht oben auf die Erdoberfläche, die verschiedenen Bilder oder Luftaufnahmen mit unterschiedlichen Auflösungen bzw. Vergrößerungen in Kacheln aufgeteilt hinterlegt sind. Soll nun beispielsweise weit abseits der befahrenen Fahrtroute zur Einsparung von Rechenkapazität nur eine Kachel geringer Auflösung wiedergegeben werden und im Bereich der Fahrtroute zur Wiedergabe aller notwendigen Details eine Kachel mit hoher Auflösung so werden in dem Übergangsbereich zwischen diesen beiden Bereichen sowohl Bildinformationen oder Kacheln mit hoher und niedriger Auflösung abgebildet. Somit wären in diesem Bereich keine Details erkennbar. Dies wird dadurch vermieden, dass dieser mittlere Bereich mit einer zusätzlichen Maske überlagert wird. Hierbei ist diese Maske derart ausgelegt, dass sie eine variable Transparenz aufweist. Das bedeutet, dass quasi durch diese Maske hindurch die virtuell dahinterliegenden Kacheln nicht gleichmäßig durchscheinend wiedergegeben werden oder sichtbar sind. Dabei werden nur die Bildinformationen mit höherer Auflösung mit dieser Maske überdeckt.

Dabei kann im Rahmen der Erfindung die Art der Änderung der Transparenz in diesem Bereich vom Fachmann in an sich beliebiger Weise, bevorzugt jedoch wie im Folgenden beschrieben, gewählt werden.

Dabei ist die Anordnung sowie die Form oder Ausdehnung der Bereiche mit jeweils niedriger und hoher Auflösung sowie der Bereiche dazwischen beliebig wählbar. Bevorzugt allerdings wird auf einem Display ein zentraler Bereich, in dem sich das Kraftfahrzeug momentan befindet, mit einer hohen Auflösung dargestellt und die Randbereiche mit einer geringen Auflösung wobei in einem Übergangsbereich dazwischen die vorstehend beschriebene Überlagerung erfolgt. Insbesondere der zentrale Bereich kann dabei rechteckig ausgebildet sein wie im Folgenden ausgeführt.

Es ist für den Fachmann ersichtlich, dass das Navigationssystem entsprechend hard und/oder softwaremäßig ausgelegt ist, um durch das Überlagern dieser Maske mit variabler Transparenz für die Bildinformationen mit höherer Auflösung bildinhaltliche Sprünge zwischen Bereichen mit einer hohen Auflösung und Bereichen mit einer niedrigeren Auflösung zu vermeiden und somit eine harmonischere Darstellung der Umgebung um das Navigationssystem zu erreichen. Dabei kann das Überlagern der Maske während des normalen Betriebs des Navigationssystems vorgenommen werden oder bereits als vorberechnete Variante ausgeführt werden.

Hierdurch ist es möglich, dass nicht alle Bereiche des zu befahrenden Gebiets, insbesondere diejenigen Bereiche, die weitab von einer möglichen befahrbaren Strecke entfernt liegen, mit hoher Auflösung im Navigationssystem vorrätig gehalten werden müssen sondern lediglich die unmittelbar auf oder neben einer Straße liegenden Bereiche. Somit ist die erforderliche Speicher- und Rechenkapazität erheblich reduziert.

Im Rahmen der Erfindung kann die Form der Kacheln beliebig gewählt werden, in einfacher Weise sind diese jedoch quadratisch. Es versteht sich, dass das Verfahren auch umgekehrt durchgeführt werden kann, d. h., dass nur die Bildinformationen mit niedrigerer Auflösung mit einer inversen Maske beaufschlagt werden.

Vorteilhafte Ausgestaltungen der Erfindung sind jeweils in den Unteransprüchen gekennzeichnet.

Nach einer bevorzugten Ausgestaltung, die in den Ansprüchen 2 und 4 gekennzeichnet ist, wird eine Maske mit von innen nach außen zunehmender Transparenz für die Bildinformationen mit hoher Auflösung dem Bereich zwischen den Bereichen mit hoher und niedriger Auflösung überlagert. Hierbei ist insbesondere der Bereich mit hoher Auflösung im Wesentlichen mittig auf dem Bildschirm des Navigationssystems wiedergegeben und der Bereich mit niedriger Auflösung randseitig um diesen umlaufend. Diese Anordnung der Bereiche wird deswegen gewählt, da bei üblichen Navigationssystemen der Cursor, der die Position des Navigationssystems angibt, mittig auf dem Bildschirm angeordnet ist und die unmittelbare Umgebung mit hoher Auflösung dargestellt werden sollte, um hier keine Informationen zu unterdrücken.

Hierzu ist in den Ansprüchen 3 und 6 vorgeschlagen, dass die Transparenz linear von innen nach außen zunimmt, um sanfte oder stetige Übergänge von den Bereichen mit hoher zu den Bereichen mit niedriger Auflösung zu erreichen. Insbesondere kann die Transparenz von innen nach außen von vollständig undurchsichtig (opak) bis zu vollständig durchsichtig zunehmen. Das bedeutet, dass am Rand zum äußeren Bereich mit geringer Auflösung hin die Bildinformationen mit hoher Auflösung aufgrund der vollständigen Transparenz der Maske praktisch vollständig ausgeblendet sind und hier nur noch Bildinformationen niedriger Auflösung angezeigt werden. Am Rand zum Bereich mit hoher Auflösung hingegen überlagern die Bildinformationen mit hoher Auflösung diejenigen mit geringer Auflösung praktisch vollständig, da hier die Maske opak ist und somit ein stetiger Übergang zu dem Bereich mit hoher Auflösung erhalten wird.

### Kurzbeschreibung der Zeichnungen

Eine Ausführungsform der Erfindung wird nachstehend anhand der Zeichnungen näher erläutert. Es zeigen:
- Figur 1:: drei Darstellungen aus dem Stand der Technik,
- Figur 2:: eine aus Kacheln zusammengesetzte zweidimensionale Karte,
- Figur 3:: eine Karte mit Kacheln verschiedener Auflösungen, und
- Figur 4: eine Maske.

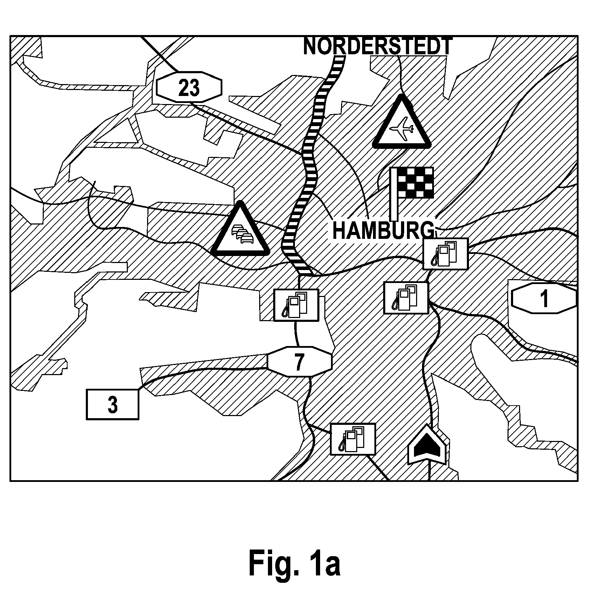

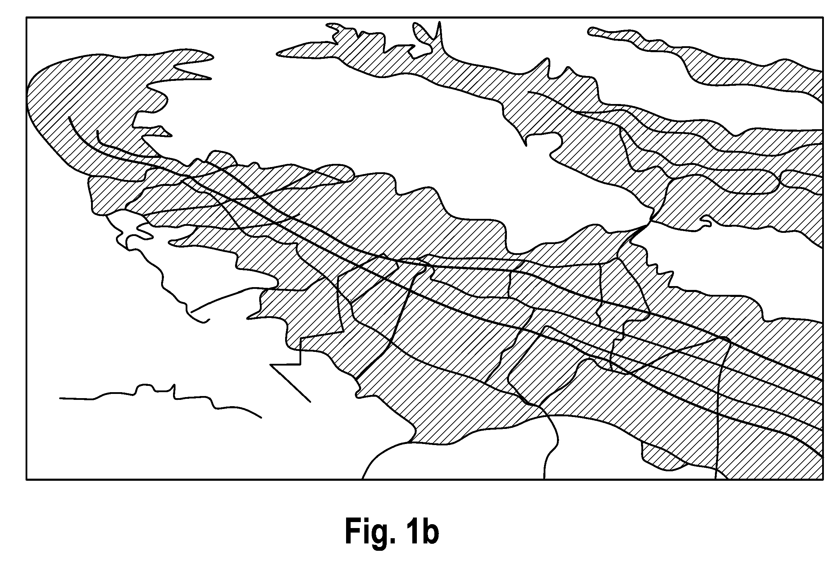

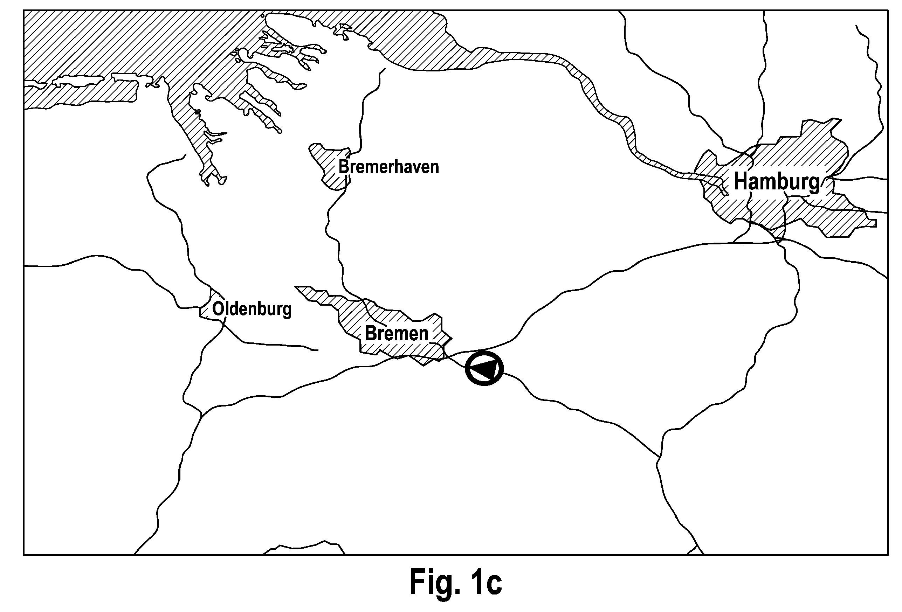

Den drei Abbildungen in Figur 1 sind verschiedene Darstellungen auf einem Bildschirm oder einem Display eines Navigationssystems entnehmbar. Dabei ist Figur 1a eine zweidimensionale Vektorkarte mit einfacher Flächenfüllung entnehmbar, entsprechend einer Draufsicht von senkrecht oben.

In Figur 1b ist eine dreidimensionale Vektorkarte dargestellt, bei der die Flächen der Umgebung um das Navigationssystem in einer Ansicht von schräg oben mit Hilfe generierter Flächen wiedergegeben sind. In Figur 1 c ist eine zweidimensionalen Darstellung wiedergegeben, wobei hier die Bildinformationen eines Satellitenbilds als Hintergrund dienen.

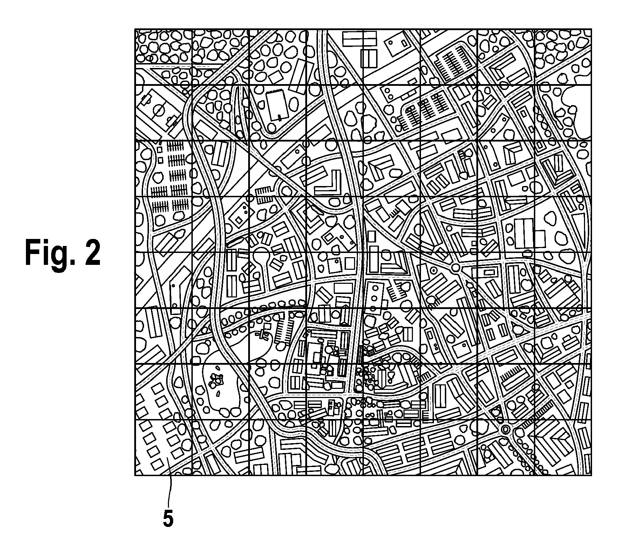

In Figur 2 ist eine zweidimensionale Karte eines zu befahrenden Gebiets wiedergegeben, die aus mehreren Kacheln 5 mit jeweils gleicher Auflösung zusammengesetzt ist. Würde für die gesamte Karte eine andere Auflösung gewählt oder notwendig werden, so müssten alle Kacheln jeweils in unterschiedlichen Auflösungen gespeichert werden, so dass hierfür ein erheblicher Speicherbedarf bestünde.

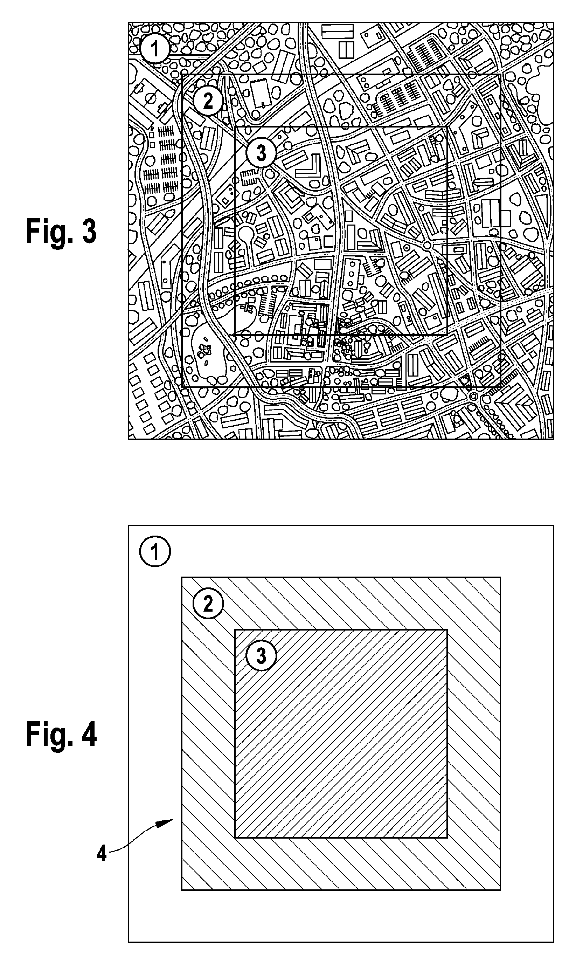

Demgegenüber ist in Figur 3 eine zweidimensionale aus Kacheln 5 zusammengesetzte Karte wiedergegeben, in deren mittigem Bereich 3 Kacheln 5 mit hoher Auflösung und im äußeren, randseitigen Bereich 1 Kacheln 5 mit niedrigerer Auflösung wiedergegeben werden. Dabei stellt der Bereich 3 üblicherweise den Bereich dar, der momentan von dem mit dem Navigationssystem ausgestatteten Kraftfahrzeug befahren wird. In dem dazwischen angeordneten Bereich 2 sind Kacheln 5 mit hoher und niedriger Auflösung einander überlagert.

Um hier einen sanften Übergang zwischen den Bereichen 1 und 3 zu erhalten, wird dem Bereich 2 die in Figur 4 dargestellte Maske 4 überlagert. Dabei ist die Maske 4 derart ausgelegt, dass ihre Transparenz für die Bildinformationen mit hoher Auflösung von innen nach außen zunimmt. Das bedeutet, dass der Farbwert weiß für vollständige Transparenz oder Durchsichtigkeit und der Farbwert schwarz für vollständige Undurchsichtigkeit steht, das bedeutet, dieser Bereich ist opak.

Das bedeutet, dass im Bereich 2 Bildinformationen mit hoher Auflösung von innen nach außen hin immer transparenter werden, so dass sie im Randbereich zum Bereich 1 hin nicht mehr sichtbar sind und somit ein sanfter und stetiger Übergang zu diesem Bereich 1 erreicht ist.

## Patentansprüche

1. Verfahren zur Darstellung einer Karte auf einem Bildschirm eines Navigationssystems, wobei die Karte aus abgespeicherten Kacheln (5) zusammengesetzt und auf dem Bildschirm Bereiche (3) mit hoher und Bereiche (1) mit niedriger Auflösung wiedergegeben werden, **dadurch gekennzeichnet, dass** bei einer zweidimensionalen Karte in einem Bereich (2) zwischen den Bereichen (1) und (3) sowohl Kacheln (5) mit hoher und mit niedriger Auflösung wiedergegeben und den Bildinformationen mit hoher Auflösung eine Maske (4) mit variabler Transparenz überlagert wird.

2. Verfahren nach Anspruch 1, **dadurch gekennzeichnet, dass** eine Maske (4) mit von innen nach außen zunehmender Transparenz dem Bereich (2) überlagert wird.

3. Verfahren nach Anspruch 2, **dadurch gekennzeichnet, dass** eine Maske (4) mit linear zunehmender Transparenz überlagert wird, insbesondere von opak bis vollständig transparent.

4. Navigationssystem mit einem Bildschirm zur Darstellung einer Karte, wobei die Karte aus abgespeicherten Kacheln (5) zusammengesetzt ist und auf dem Bildschirm Bereiche (3) mit hoher und Bereiche (1) mit niedriger Auflösung wiedergebbar sind, **dadurch gekennzeichnet, dass** bei einer zweidimensionalen Karte in einem Bereich (2) zwischen den Bereichen (1) und (3) sowohl Kacheln (5) mit hoher und mit niedriger Auflösung wiedergebbar und den Bildinformationen mit hoher Auflösung eine Maske (4) mit variabler Transparenz überlagerbar ist.

5. Navigationssystem nach Anspruch 4, **dadurch gekennzeichnet, dass** eine Maske (4) mit von innen nach außen zunehmender Transparenz dem Bereich (2) überlagerbar ist.

6. Navigationssystem nach Anspruch 5, **dadurch gekennzeichnet, dass** eine Maske (4) mit linear zunehmender Transparenz überlagerbar ist, insbesondere von opak bis vollständig transparent.
